# EUROPÄISCHE PATENTSCHRIFT

(11) **EP 2 057 217 B1**
(45) Veröffentlichungstag und Bekanntmachung des Hinweises auf die Patenterteilung: **22.02.2017**
(21) Anmeldenummer: 07802930.3
(22) Anmeldetag: 27.08.2007
(51) Int. Cl.: C08K 3/30, C08K 9/00

(54) **BARIUMSULFAT ENTHALTENDES KOMPOSIT**
BARIUM SULFATE-CONTAINING COMPOSITE
COMPOSITE CONTENANT DU SULFATE DE BARYUM

(30) Priorität: 25.08.2006 DE 102006039855
(43) Veröffentlichungstag der Anmeldung: 13.05.2009
(73) Patentinhaber: Sachtleben Chemie GmbH, 47198 Duisburg (DE); Institut Für Verbundwerkstoffe GmbH, 67663 Kaiserslautern (DE)
(72) Erfinder: GROTHE, Sonja, 46244 Bottrop (DE); FRITZEN, Petra, 47228 Duisburg (DE); WINKLER, Jochen, 47509 Rheurdt (DE); ROHE, Bernd, 46539 Dinslaken (DE); BITTMANN, Birgit, 67663 Kaiserslautern (DE); HAUPERT, Frank, 67705 Stelzenberg (DE)
(74) Vertreter: Nobbe, Matthias
(86) Internationale Anmeldenummer: PCT/EP2007/058892
(87) Internationale Veröffentlichungsnummer: WO 2008/023074

(56) Entgegenhaltungen:
- EP-A- 0 184 097
- EP-A1- 0 335 159
- EP-A2- 0 362 623
- WO-A-00/61361
- WO-A-2005/054357
- WO-A-2005/054380
- WO-A-2006/131493
- JP-A- 2001 279 070
- JP-A- 2005 232 239
- US-A- 5 503 840
- US-B1- 6 740 697

## Beschreibung

Gegenstand der Erfindung ist ein Bariumsulfat enthaltendes Komposit, ein Verfahren zu dessen Herstellung und die Verwendung dieses Komposits.

Aus der Anwendung von konventionellen Füllstoffen und Pigmenten, auch Additive genannt, in polymeren Systemen ist bekannt, dass die Art und die Stärke der Wechselwirkungen zwischen den Partikeln des Füllstoffs bzw. Pigments und der polymeren Matrix die Eigenschaften eines Komposits beeinflusst. Durch gezielte Oberflächenmodifizierung können die Wechselwirkungen zwischen den Partikeln und der polymeren Matrix beeinflusst und somit die Eigenschaften des Systems aus Füllstoffen und Pigmenten in einer polymeren Matrix, im folgenden auch Komposit genannt, verändert werden. Eine übliche Art der Oberflächenmodifizierung ist die Funktionalisierung der Partikeloberflächen unter Verwendung von Alkoxyalkylsilanen. Die Oberflächenmodifizierung kann dazu dienen, die Verträglichkeit der Partikel mit der Matrix zu erhöhen. Darüber hinaus kann durch die geeignete Auswahl von funktionellen Gruppen auch eine Anbindung der Partikel an die Matrix erreicht werden. Nachteilig bei der Verwendung von konventionellen Füllstoffen ist, dass diese aufgrund ihrer Partikelgröße sichtbares Licht stark streuen und deshalb die Transparenz des Komposits deutlich reduziert wird. Darüber hinaus stellt auch die schlechte chemische Beständigkeit von konventionellen Füllstoffen wie beispielsweise Calciumcarbonat einen Nachteil für zahlreiche Anwendungen dar.

Eine zweite Möglichkeit zur Verbesserung der mechanischen Eigenschaften von polymeren Materialien ist die Verwendung von ultrafeinen Partikeln. US-B-6 667 360 offenbart polymere Komposite, die 1 bis 50 Gew.-% Nanopartikel mit Partikelgrößen von 1 bis 100 nm enthalten. Als Nanopartikel werden Metalloxide, Metallsulfide, Metallnitride, Metallcarbide, Metallfluoride und Metallchloride vorgeschlagen, wobei die Oberfläche dieser Partikel unmodifiziert ist. Als polymere Matrix werden Epoxide, Polycarbonate, Silikone, Polyester, Polyether, Polyolefine, synthetischer Kautschuk, Polyurethane, Polyamid, Polystyrene, Polyphenylene Oxide, Polyketone und Copolymere sowie Mischung davon genannt. Die in US-B-6 667 360 offenbarten Komposite sollen im Vergleich zum ungefüllten Polymer verbesserte mechanische Eigenschaften, insbesondere Zugeigenschaften und Kratzfestigkeiten, aufweisen. Ein Nachteil der offenbarten ultrafeinen Partikel ist, dass diese oftmals eine hohe Mohs'sche Härte und somit eine hohe Abrasivität besitzen. Zudem ist der Brechungsindex der beschriebenen Materialien (beispielsweise Titandioxid n = 2,7) im Vergleich zum Brechungsindex der polymeren Materialien recht hoch. Dies führt zu einer vergleichsweise starken Lichtstreuung und folglich zur Reduzierung der Transparenz der Komposite.

Einen Sonderfall innerhalb der typischen Pigmente und Füllstoffe stellt Bariumsulfat (BaSO₄) dar. Bariumsulfat ist chemisch inert und geht keinerlei Reaktionen mit typischen Polymeren ein. Mit einer Mohs'schen Härte von 3 ist Bariumsulfat vergleichsweise weich; so liegt die Mohs'sche Härte von Titandioxid in der Rutil-Modifikation bei 6,5. Der Brechungsindex von Bariumsulfat ist mit n = 1,64 vergleichsweise niedrig.

Die Patentanmeldung DE 102005025719 A1 offenbart ein Verfahren zur Einarbeitung von desagglomeriertem Bariumsulfat mit einer mittleren Partikelgröße von kleiner als 0,5 µm, das mit einem Dispergiermittel gecoatet ist, in Vorstufen von Kunststoffen, z.B. in Polyolen. Bei diesem Verfahren wird ein Kunststoff hergestellt, der ein Dispergiermittel und ein Kristallisationsinhibitor enthaltendes desagglomerietes Bariumsulfat umfasst. Die Anmeldung WO 2007-039625 A1 beschreibt den Einsatz von Bariumsulfat bzw. Calciumcarbonat-Partikeln, die mindestens eine organische Komponente enthalten, in transparenten Polymeren. Ein genereller Nachteil beim Einsatz der organisch gecoateten, desagglomerierten Bariumsulfat-Partikeln besteht darin, dass die organischen Komponenten nicht universell einsetzbar sind. Besonders nachteilig ist die Verwendung von Kristallisationsinhibitoren, da diese bereits bei der Herstellung (Fällung) der Bariumsulfat-Partikel eingesetzt werden. In diesem Fall schränkt die Verträglichkeit des Kristallisationsinhibitors mit den Kunststoffvorstufen bzw. Kunststoffen die Einsatzmöglichkeiten des Produktes stark ein. In Extremfall kann dies bedeuten, dass für jeden Kunststoff ein neues Produkt entwickelt und hergestellt werden muss. Ein weiterer Nachteil, der in den Anmeldungen DE 102005025719 A1 und WO 2007-039625 A1, beschriebenen desagglomerierten Bariumsulfat-Partikeln besteht in der Partikelgrößenverteilung der Sekundärpartikel, die einen mittleren Partikeldurchmesser von kleiner als 2 µm, bevorzugt < 250 nm, besonders bevorzugt < 200 nm, ganz besonders bevorzugt < 130 nm, noch mehr bevorzugt <100 nm, insbesondere bevorzugt < 50 nm aufweisen sollen. Solch feine Sekundärpartikelverteilungen führen zu einer starken Staubneigung, die aus Gründen der Arbeitssicherheit insbesondere bei ultrafeinen Partikeln zu vermeiden ist.

Ein weiterer Nachteil der im Stand der Technik beschriebenen, mit Füllstoffen modifizierten Komposite sind deren für viele Anwendungen unzureichenden mechanischen Eigenschaften.

Aufgabe der vorliegenden Erfindung ist es, die Nachteile des Standes der Technik zu überwinden.

Insbesondere Aufgabe der Erfindung ist es, ein Komposit zur Verfügung zu stellen, das im Vergleich zu Kompositen aus dem Stand der Technik deutlich verbesserte Biegemodule, Biegefestigkeiten, Zugmodule, Zugfestigkeiten, Risszähigkeiten, Bruchzähigkeiten, Schlagzähigkeiten und Verschleißraten besitzt.

Dies ist für bestimmte Anwendungen von Kompositmaterialien, beispielsweise im Automobil-, Flugzeug- oder Luftfahrtbereich von großer Bedeutung. So sind verringerte Verschleißraten bei Gleitlagern, Zahnrädern oder Walzen- und Kolbenbeschichtungen gewünscht. Gerade diese Bauteile sollen eine lange Lebendauer aufweisen und somit zu verlängerten Standzeiten von Maschinen führen. In Synthesefasern beispielsweise aus PA6, PA66 oder PET können die Reißfestigkeiten verbessert werden.

Überraschenderweise wurde die Aufgabe durch erfindungsgemäße Komposite mit den Merkmalen des Hauptanspruchs gelöst. Vorzugsweise Ausgestaltungen sind in den Unteransprüchen charakterisiert.

Überraschenderweise wurden erfindungsgemäß bereits bei der Verwendung von gefälltem, nicht oberflächenmodifiziertem Bariumsulfat mit Kristallitgrößen d₅₀ kleiner 350 nm (gemessen nach dem Debye-Scherrer-Verfahren) die mechanischen und tribologischen Eigenschaften von Polymer-Kompositen stark verbessert. Dies ist umso überraschender, als die nicht oberflächenmodifizierten Bariumsulfatpartikel keine Bindung zwischen Partikel und Matrix aufbauen können.

Es ist bekannt, dass chemische oder physikalische Bindungen zwischen Additiv und Matrix sich zusätzlich günstig auf die Verbesserung der mechanischen und tribologischen Eigenschaften des Komposits auswirken. Erfindungsgemäß ist daher in einer besonderen Ausgestaltung vorgesehen, Bariumsulfatpartikel bereitzustellen und einzusetzen, die in der Lage sind, solche Bindungen aufzubauen. Dazu sind erfindungsgemäß oberflächenmodifizierte Bariumsulfatpartikel vorgesehen. Die zur gezielten Einstellung der Bindung zwischen Partikel und Matrix benötigte Oberflächenmodifizierung, wird erfindungsgemäß aber erst nach der Herstellung der Bariumsulfat-Partikel (z.B. Fällung in wässrigen Medien) in einem zusätzlichen Verfahrensschritt durchgeführt.

Der Vorteil der nachträglichen Oberflächenmodifizierung liegt in der damit möglichen hohen Flexibilität. Diese Verfahrensweise ermöglicht es einerseits, dass die Partikelbildung bei der Fällung von Bariumsulfat in gewohnter Weise vorgenommen werden kann, das heißt, die Partikelbildung wird durch Copräzipitate nicht negativ beeinflusst. Andererseits ist es leichter, die Partikelgröße und -morphologie der Bariumsulfatpartikel zu steuern.

Die Fällung des erfindungsgemäß einzusetzenden Bariumsulfats kann nach allen aus dem Stand der Technik bekannten Verfahren durchgeführt werden. Erfindungsgemäß bevorzugt wird Bariumsulfat eingesetzt, das in einem Fällreaktor zur Fällung von nanoskaligen Partikeln, insbesondere einer Reaktionszelle zur ultraschnellen Vermischung von mehreren Reaktanden, beispielsweise von wässrigen Lösungen von Bariumhydroxid oder Bariumsulfid oder Bariumchlorid und Natriumsulfat oder Schwefelsäure, hergestellt wurde. Erfindungsgemäß bevorzugt liegt das Bariumsulfat nach der Fällung in Form einer Fällsuspension vor.

Das erfindungsgemäß eingesetzte Bariumsulfat wird gewaschen und aufkonzentriert, so dass das anfallende Abwasser nicht organisch belastet ist. Das Bariumsulfat liegt nun in Form einer konzentrierten Bariumsulfatsuspension vor.

Die Trocknung der konzentrierten Bariumsulfatsuspension kann mittels Sprühtrocknung, Gefriertrocknung und/oder Mahltrocknung erfolgen. Abhängig vom Trocknungsverfahren kann eine anschließende Mahlung der getrockneten Pulver notwendig sein. Die Mahlung kann nach an sich bekannten Verfahren durchgeführt werden.

Vorzugsweise werden zur Herstellung der erfindungsgemäßen Komposite sprühgetrocknete Bariumsulfat-Pulver verwendet. Diese haben den Vorteil, dass die relativ groben Sprühtrockneragglomerate ein staubarmes und sehr gut fließfähiges Pulver bilden, das zudem überraschend gut dispergierbar ist.

Das erfindungsgemäße Komposit enthält eine polymere Matrix mit 0,1 bis 60 Gew.-% gefällten Bariumsulfatpartikeln mit mittleren Kristallitgrößen d₅₀ kleiner 350 nm (gemessen nach dem Debye-Scherrer-Verfahren). Bevorzugt beträgt die Kristallitgröße d₅₀ weniger als 200 nm, besonders bevorzugt 3 bis 50 nm. Erfindungsgemäß können die Bariumsulfatpartikel dabei sowohl oberflächenmodifiziert als auch nicht oberflächenmodifiziert sein.

Weiterhin können die erfindungsgemäßen Komposite dem Fachmann an sich bekannte Bestandteile enthalten, beispielsweise mineralische Füllstoffe, Glasfasern, Stabilisatoren, Prozessadditive ((auch protective systems genannt) z. B. Dispergierhilfen, Trennmittel, Antioxidantien, Antiozonantien u.a.), Pigmente, Flammschutzmittel (z. B. Aluminiumhydroxid, Antimontrioxid, Magnesiumhydroxid,, u. a.), Vulkanisationsbeschleuniger, Vulkanisationsverzögerer, Zinkoxid, Stearinsäure, Schwefel, Peroxid und/oder Weichmacher.

Ein erfindungsgemäßes Komposit kann beispielsweise zusätzlich bis zu 80 Gew.-%, vorzugsweise 10 bis 80 Gew.-%, mineralische Füllstoffe und/oder Glasfasern, bis zu 10 Gew.-%, vorzugsweise 0,05 bis 10 Gew.-% Stabilisatoren und Prozessadditive (z. B. Dispergierhilfen, Trennmittel, Antioxidantien, u. a.), bis zu 10 Gew.-% Pigment und bis zu 40 Gew.-% Flammschutzmittel (z. B. Aluminiumhydroxid, Antimontrioxid, Magnesiumhydroxid, u. a.) enthalten.

Ein erfindungsgemäßes Komposit kann beispielsweise 0,1 bis 60 Gew.-% Bariumsulfat, 0 bis 80 Gew.-% mineralische Füllstoffe und/oder Glasfasern, 0,05 bis 10 Gew.-% Stabilisatoren und Prozessadditive (z. B. Dispergierhilfen, Trennmittel, Antioxidantien, u. a.), 0 bis 10 Gew.-% Pigment, 0 bis 40 Gew.-% Flammschutzmittel (z. B. Aluminiumhydroxid, Antimontrioxid, Magnesiumhydroxid, u. a.) enthalten.

Die polymere Matrix kann erfindungsgemäß aus einem Thermoplast, einem Hochleistungskunststoff oder einem Epoxidharz bestehen. Als thermoplastische Materialien sind beispielsweise Polyester, Polyamid, PET, Polyethylen, Polypropylen, Polystyrol, dessen Copolymerisate und Blends, Polycarbonat, PMMA, oder Polyvinylchlorid geeignet. Als Hochleistungskunststoffe sind PTFE, Fluor-Thermoplaste (z. B. FEP, PFA, u.a.), PVDF, Polysulfone (z. B. PES, PSU, PPSU, u.a.), Polyetherimid, Flüssigkristalline Polymere und Polyetherketone geeignet. Weiterhin eignen sich Epoxidharze als polymere Matrix.

Erfindungsgemäß können ultrafeine Bariumsulfatpartikel ohne Oberflächenmodifizierung eingesetzt werden. Alternativ können die Bariumsulfatpartikel, in einer besonderen Ausgestaltung, eine anorganische und/oder eine organische Oberflächenmodifizierung besitzen.

Die anorganische Oberflächenmodifizierung des ultrafeinen Bariumsulfates besteht typischerweise aus mindestens einer anorganischen Verbindung, die ausgewählt sind aus Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen bzw. Salzen. Beispielhaft genannt seien Natriumsilikat, Natriumaluminat und Aluminiumsulfat.

Die anorganische Oberflächenbehandlung des ultrafeinen BaSO₄ findet in wässriger Aufschlämmung statt. Die Reaktionstemperatur soll dabei vorzugsweise 50°C nicht übersteigen. Der pH-Wert der Suspension wird, beispielsweise unter Verwendung von NaOH auf pH-Werte im Bereich größer 9 eingestellt. Unter starkem Rühren werden dann die Nachbehandlungschemikalien (anorganische Verbindungen), vorzugsweise wasserlösliche anorganische Verbindungen wie beispielsweise Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salze zugegeben. Der pH-Wert und die Mengen an Nachbehandlungschemikalien werden erfindungsgemäß so gewählt, dass letztere vollständig in Wasser gelöst vorliegen. Die Suspension wird intensiv gerührt, so dass sich die Nachbehandlungschemikalien homogen in der Suspension verteilen, vorzugsweise für mindestens 5 Minuten. Im nächsten Schritt wird der pH-Wert der Suspension abgesenkt. Als vorteilhaft hat sich dabei erwiesen, den pH-Wert langsam und unter starkem Rühren abzusenken. Besonders vorteilhaft wird der pH-Wert innerhalb von 10 bis 90 Minuten auf Werte von 5 bis 8 abgesenkt. Im Anschluss daran schließt sich erfindungsgemäß eine Reifezeit, vorzugsweise eine Reifezeit von etwa einer Stunde an. Die Temperaturen sollen dabei vorzugsweise 50°C nicht überschreiten. Die wässrige Suspension wird dann gewaschen und getrocknet. Zur Trocknung von ultrafeinem, oberflächenmodifiziertem BaSO₄ bieten sich beispielsweise die Sprühtrocknung, die Gefriertrocknung und/oder die Mahltrocknung an. Abhängig vom Trocknungsverfahren kann eine anschließende Mahlung der getrockneten Pulver notwendig sein. Die Mahlung kann nach an sich bekannten Verfahren durchgeführt werden.

Zur Herstellung silanisierter, ultrafeiner, oberflächenmodifizierter BaSO₄-Partikel wird eine wässrige BaSO₄-Suspension aus bereits anorganisch oberflächenmodifizierten BaSO₄-Partikeln mit mindestens einem Silan zusätzlich modifiziert. Als Silane werden vorzugsweise Alkoxyalkylsilane eingesetzt, besonders bevorzugt werden die Alkoxyalkylsilane ausgewählt aus Octyltriethoxysilan, gamma-Methacrylpropyltrimethoxysilan, gamma-Glycidoxypropyltrimethoxy-silan, gamma-Aminopropyltriethoxysilan, gamma-Aminopropyltrimethoxysilan, gamma-Isocynatopropyltriethoxysilan, Vinyltrimethoxysilan und/oder hydrolysierten Silanen, wie gamma-Aminopropylsilsesquioxan (Fa. GE). Dazu wird vor oder nach der Waschung eine BaSO₄-Suspension aus anorganisch oberflächenmodifizierten BaSO₄-Partikeln unter starkem Rühren oder unter Dispergierung mit einem Alkoxyalkylsilan versetzt. Es schließt sich erfindungsgemäß eine Reifezeit an, vorzugsweise eine Reifezeit von 10 bis 60 Minuten, vorzugsweise bei Temperaturen von maximal 40°C. Anschließend wird wie bereits beschrieben weiter verfahren. Alternativ kann das Alkoxyalkylsilan auch nach der Trocknung auf die anorganisch modifizierten Partikel durch Aufmischen aufgebracht werden.

Als organische Oberflächenmodifikatoren sind erfindungsgemäß folgende Verbindungen besonders geeignet: Polyether, Silane, Polysiloxane, Polycarbonsäuren, Fettsäuren, Polyethylenglykole, Polyester, Polyamide, Polyalkohole, organische Phosphonsäuren, Titanate, Zirkonate, Alkyl- und/oder Arylsulfonate, Alkyl- und/oder Arylsulfate, Alkyl- und/oder Arylphosphorsäureester.

Die Herstellung von organisch oberflächenmodifiziertem Bariumsulfat kann nach an sich bekannten Verfahren durchgeführt werden. Erfindungsgemäß wird die Bariumsulfatsuspension mit einer Bariumkomponente versetzt, so dass ein Bariumüberschuss entsteht. Als Bariumkomponente kann jede wasserlösliche Bariumverbindung, beispielsweise Bariumsulfid, Bariumchlorid und/oder Bariumhydroxid eingesetzt werden. Die Bariumionen adsorbieren an den Oberflächen der Bariumsulfatpartikel.

Dann werden geeignete organische Verbindungen unter starkem Rühren und/oder während einer Dispergierung zu dieser Suspension gegeben. Die organischen Verbindungen sind so auszuwählen, dass sie mit Bariumionen eine schwerlösliche Verbindung bilden. Durch die Zugabe der organischen Verbindungen zur Bariumsulfatsuspension fallen die organischen Verbindungen mit den überschüssigen Bariumionen auf der Oberfläche des Bariumsulfats aus.

Als organische Verbindungen eignen sich Verbindungen ausgewählt aus der Gruppe der Alkyl- und/oder Arylsulfonate, Alkyl- und/oder Arylsulfate, Alkyl- und/oder Arylphosphorsäureester oder Mischungen aus mindestes zwei dieser Verbindungen, wobei die Alkyl- oder Arylreste durch funktionelle Gruppen substituiert sein können. Auch können die organischen Verbindungen Fettsäuren sein, die ggf. funktionelle Gruppen besitzen. Auch Mischungen aus mindestens zwei solcher Verbindungen können eingesetzt werden.

Beispielsweise eingesetzt werden: Alkylsulfonsäuresalz, Natriumpolyvinylsulfonat, Natrium-N-alkyl-benzolsulfonat, Natriumpolystyrolsulfonat, Natriumdodecylbenzolsulfonat, Natriumlaurylsulfat, Natriumcetylsulfat, Hydroxylaminsulfat, Triethanolammoniumlaurylsulfat, Phosphorsäuremonoethylmonobenzylester, Lithiumperfluoroctansulfonat, 12-Brom-1-dodecansulfonsäure, Natium-10-hydroxy-1-decansulfonat, Natrium-Carrageenan, Natrium-10-Mercapto-1-Cetansulfonat, Natrium-16-Ceten(1)-sulfat, Oleylcetylalkoholsulfat, Ölsäuresulfat, 9,10-Dihydroxystearinsäure, Isostearinsäure, Stearinsäure, Ölsäure.

Das organisch modifizierte Bariumsulfat kann entweder direkt in Form der vorliegenden wässrigen Paste eingesetzt oder vor der Anwendung getrocknet werden. Die Trocknung kann nach an sich bekannten Verfahren durchgeführt werden. Für die Trocknung bietet sich insbesondere der Einsatz von Konvektionstrocknern, Sprühtrocknern, Mahltrocknern, Gefriertrocknern und/oder Pulsationstrocknern an. Andere Trockner sind jedoch erfindungsgemäß ebenso einsetzbar. Abhängig vom Trocknungsverfahren kann eine anschließende Mahlung der getrockneten Pulver notwendig sein. Die Mahlung kann nach an sich bekannten Verfahren durchgeführt werden. Das organisch modifizierte Bariumsulfat hat vorzugsweise einen mittleren Partikeldurchmesser von d₅₀ = 1 nm bis 100 µm, bevorzugt von d₅₀ = 1 nm bis 1 µm, besonders bevorzugt von d₅₀ = 5 nm bis 0,5 µm und liegt vor der organischen Modifizierung vorzugsweise auf Primärpartikelgröße dispergiert vor.

Die Primärpartikel haben eine logarithmische Partikelgrößenverteilung mit einem Median von d = 1 bis 5000 nm, vorzugsweise d = 1 bis 1000 nm, besonders vorzugsweise von d = 5 bis 500 nm mit einer geometrischen Standardabweichungen von σ_{g} < 1,5, vorzugsweise von σ_{g} < 1,4.

Das organisch modifizierte Bariumsulfat kann nach der organischen Modifizierung zusätzlich mit funktionellen Silanderivaten oder funktionellen Siloxanen weiter nachbehandelt werden. Beispielsweise werden eingesetzt: Octyltriethoxysilan, Methyltriethoxysilan, γ-Methacryloxypropyltrimethoxysilan, γ-Glycidyloxypropyltrimethoxysilan, γ-Aminopropyltriethoxysilan, γ-Isocyanatopropyltriethoxysilan, Vinyltrimethoxysilan.

Erfindungsgemäß haben die organisch oberflächenmodifizierten Bariumsulfatpartikel optional ein oder mehrere funktionelle Gruppen, beispielsweise eine oder mehrere Hydroxy-, Amino-, Carboxyl-, Epoxy-, Vinyl-, Methacrylat-, und/oder Isocyanat-Gruppen, Thiole, Alkylthiocarboxylate, Di- und/oder polysulfidische Gruppen.

Die Oberflächenmodifikatoren können chemisch und/oder physikalisch an die Partikeloberfläche angebunden sein. Die chemische Bindung kann kovalent oder ionisch sein. Als physikalische Bindung sind Dipol-Dipol- oder Van-der-Waals-Bindungen möglich. Bevorzugt ist die Anbindung der Oberflächenmodifikatoren über kovalente Bindungen oder über physikalische Dipol-Dipol-Bindungen.

Erfindungsgemäß besitzen die oberflächenmodifizierten Bariumsulfatpartikel die Fähigkeit, über die Oberflächenmodifikatoren teilweise oder ganz eine chemische und/oder physikalische Bindung zur polymeren Matrix einzugehen. Als chemische Bindungsarten sind kovalente und ionische Bindungen geeignet. Als physikalische Bindungsarten sind Dipol-Dipol- und Van-der-Waals-Bindungen geeignet.

Vorzugsweise kann zur Herstellung des erfindungsgemäßen Komposits zunächst ein Masterbatch hergestellt werden, der vorzugsweise 5 - 80 Gew.-% Bariumsulfat enthält. Dieses Masterbatch kann dann entweder nur mit dem Rohpolymer verdünnt oder mit den weiteren Bestandteilen der Rezeptur vermischt und ggf. nochmals dispergiert werden.

Zur Herstellung des erfindungsgemäßen Komposits kann auch ein Verfahren gewählt werden, bei dem das Bariumsulfat zunächst in organischen Substanzen insbesondere in Polyolen, Polyglycolen, Polyethern, Dicarbonsäuren und deren Derivate, AH-Salz, Caprolactam, Paraffinen, Phosphorsäureestern, Hydroxycarbonsäureestern, Cellulose, Styrol, Methylmethacrylat, organische Diamiden, Epoxidharzen und Weichmachern (u.a. DOP, DIDP, DINP) eingearbeitet und dispergiert wird. Diese mit Bariumsulfat versetzten organischen Substanzen können dann als Ausgangsmaterial für die Komposit-Herstellung genutzt werden.

Zur Dispergierung des Bariumsulfats im Masterbatch bzw. in organischen Substanzen können übliche Dispergierverfahren, insbesondere unter Verwendung von Schmelzeextrudern, Dissolvern, Dreiwalzen, Kugelmühlen, Perlmühlen, Tauchmühlen, Ultraschall oder Knetern verwendet werden. Besonders vorteilhaft ist die Verwendung von Tauchmühlen oder Perlmühlen mit Perlendurchmessern von d < 1,5 mm.

Das erfindungsgemäße Komposit hat überraschenderweise herausragende mechanische und tribologische Eigenschaften. Im Vergleich zum ungefüllten Polymer hat das erfindungsgemäße Komposit deutlich verbesserte Biegemodule, Biegefestigkeiten, Zugmodule, Zugfestigkeiten, Risszähigkeiten, Bruchzähigkeiten, Schlagzähigkeiten und Verschleißraten.

Gegenstand der Erfindung sind im Einzelnen:
- Komposite, bestehend aus mindestens einem Thermoplast, mindestens einem Hochleistungskunststoff und/oder mindestens einem Epoxidharz und Bariumsulfat, dessen Kristallitgröße d₅₀ kleiner 350 nm, bevorzugt kleiner 200 nm ist und besonders bevorzugt zwischen 3 und 50 nm beträgt und wobei das Bariumsulfat sowohl anorganisch oder organisch oberflächenmodifiziert als auch nicht oberflächenmodifiziert sein kann (nachfolgend auch Bariumsulfat-Komposite genannt);
- Bariumsulfat-Komposite, wobei als Thermoplast mindestens ein Polyester, ein Polyamid, ein PET, ein Polyethylen, ein Polypropylen, ein Polystyrol, dessen Copolymerisate und Blends, Polycarbonat, PMMA, und/oder PVC eingesetzt wird;
- Bariumsulfat-Komposite, wobei als Hochleistungskunststoff mindestens ein PTFE, ein Fluor-Thermoplast (z. B. FEP, PFA, u.a.), PVDF, ein Polysulfon (z. B. PES, PSU, PPSU, u.a.), ein Polyetherimid, ein flüssigkristallines Polymer und/oder ein Polyetherketon eingesetzt wird;
- Bariumsulfat-Komposite, wobei ein Epoxidharz eingesetzt wird;
- Bariumsulfat-Komposite, wobei das Komposit 12 bis 99,8 Gew.-% Thermoplast, 0,1 bis 60 Gew.-% Bariumsulfat, 0 bis 80 Gew.-% mineralischen Füllstoff und/oder Glasfaser, 0,05 bis 10 Gew.-% Antioxidant, 0 bis 2,0 Gew.-% organischen Metalldesaktivator, 0 bis 2,0 Gew.-% Prozessadditive (u. a. Dispergierhilfen, Haftvermittler, u. a.), 0 bis 10 Gew.-% Pigment, und 0 bis 40 Gew.-% Flammschutzmittel (z. B. Aluminiumhydroxid, Antimontrioxid, Magnesiumhydroxid, u. a.) enthält;
- Bariumsulfat-Komposite, wobei das Komposit 12 bis 99,9 Gew-% Hochleistungskunststoff, 0,1 bis 60 Gew-% Bariumsulfat, 0 bis 80 Gew-% mineralischen Füllstoff und/oder Glasfaser, 0 bis 5,0 Gew-% Prozessadditive (u.a. Dispergierhilfen, Haftvermittler), 0 bis 10 Gew-% Pigment enthält;
- Bariumsulfat-Komposite, wobei das Komposit 20 bis 99,9 Gew.-% Epoxidharz, 0,1 bis 60 Gew.-% Bariumsulfat, 0 bis 80 Gew.-% mineralischen Füllstoff und/oder Glasfaser, 0 bis 10 Gew.-% Prozessadditive, 0 bis 10 Gew.-% Pigment, und 0 bis 40 Gew.-% Aluminiumhydroxid enthält;
- Bariumsulfat-Komposite, wobei der Anteil von Bariumsulfat im Komposit 0,1 bis 60 Gew.-%, bevorzugt 0,5 bis 30 Gew.-%, besonders bevorzugt 1,0 bis 20 Gew.-%, beträgt;
- Bariumsulfat-Komposite, wobei die anorganische Oberflächenmodifizierung des ultrafeinen Bariumsulfates aus einer Verbindung besteht, die mindestens zwei der folgenden Elemente enthält: Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salze;
- Bariumsulfat-Komposite, wobei die organische Oberflächenmodifizierung aus einem oder mehreren der folgenden Bestandteile besteht: Polyether, Siloxane, Polysiloxane, Polycarbonsäuren, Polyester, Polyamide, Polyethylenglykole, Polyalkohle, Fettsäuren, bevorzugt ungesättigte Fettsäuren, Polyacrylate, Alkylsulfonate, Arylsulfonate, Alkylsulfate, Arylsulfate, Alkylphosphorsäureester, Arylphosphorsäureester;
- Bariumsulfat-Komposite, wobei die Oberflächenmodifizierung eine oder mehrere der folgenden funktionellen Gruppen enthält: Hydroxyl-, Amino-, Carboxyl-, Epoxy-, Vinyl-, Methacrylat-, und/oder Isocyanat-Gruppen, Thiole, Alkylthiocarboxylate, Di- und/oder polysulfidische Gruppen.
- Bariumsulfat-Komposite, wobei die Oberflächenmodifizierung kovalent an die Partikeloberfläche angebunden ist;
- Bariumsulfat-Komposite, wobei die Oberflächenmodifizierung ionisch an die Partikeloberfläche gebunden ist;
- Bariumsulfat-Komposite, wobei die Oberflächenmodifizierung über physikalische Wechselwirkungen an die Partikeloberfläche gebunden ist;
- Bariumsulfat-Komposite, wobei die Oberflächenmodifizierung durch eine Dipol-Dipol- oder eine Van-der-Waals-Wechselwirkung an die Partikeloberfläche gebunden ist;
- Bariumsulfat-Komposite, wobei die oberflächenmodifizierten Bariumsulfatpartikel eine Bindung zur polymeren Matrix eingehen;
- Bariumsulfat-Komposite, wobei eine chemische Bindung zwischen den Bariumsulfatpartikeln und der polymeren Matrix vorliegt;
- Bariumsulfat-Komposite, wobei die chemische Bindung zwischen den Bariumsulfatpartikeln und der polymeren Matrix eine kovalente und/oder eine ionische Bindung ist;
- Bariumsulfat-Komposite, wobei eine physikalische Bindung zwischen den Bariumsulfatpartikeln und der polymeren Matrix vorliegt;
- Bariumsulfat-Komposite, wobei die physikalische Bindung zwischen den Bariumsulfatpartikeln und der polymeren Matrix eine Dipol-Dipol-Bindung (Keeson), eine induzierte Dipol-Dipol-Bindung (Debye) oder eine dispersive Bindung (Van-der-Waals) ist;
- Bariumsulfat-Komposite, wobei eine physikalische und eine chemische Bindung zwischen den Bariumsulfatpartikeln und der polymeren Matrix vorliegen;
- Verfahren zur Herstellung des Bariumsulfat-Komposits;
- Verfahren zur Herstellung des Bariumsulfat-Komposits, wobei zunächst ein Masterbatch hergestellt wird und das Bariumsulfat-Komposit durch Verdünnung des Masterbatches mit dem Rohpolymer erhalten wird, wobei das Masterbatch 5 - 80 Gew.-% Bariumsulfat, bevorzugt 15 - 60 Gew.-% Bariumsulfat enthält;
- Verfahren zur Herstellung des Bariumsulfat-Komposits, wobei zunächst ein Masterbatch hergestellt wird und das Bariumsulfat-Komposit durch Verdünnung des Masterbatches mit dem Rohpolymer unter Dispergierung erhalten wird;
- Verfahren zur Herstellung des Bariumsulfat-Komposits, bei dem das Masterbatch mit den weiteren Bestandteile der Rezeptur in einem oder mehreren Schritten vermischt wird und sich vorzugsweise noch eine Dispergierung anschließt;
- Verfahren zur Herstellung des Bariumsulfat-Komposits, wobei das Bariumsulfat zunächst in organischen Substanzen insbesondere in Polyolen, Polyglycolen, Polyethern, Dicarbonsäuren und deren Derivate, AH-Salz, Caprolactam, Paraffinen, Phosphorsäureestern, Hydroxycabonsäureestern, Cellulose, Styrol, Methylmethacrylat, organische Diamiden, Epoxidharzen und Weichmachern (u.a. DOP, DIDP, DINP) eingearbeitet und dispergiert wird, wobei das Bariumsulfat sowohl anorganisch oder organisch oberflächenmodifiziert als auch nicht oberflächenmodifiziert sein kann;
- Verfahren zur Herstellung des Bariumsulfat-Komposits, wobei die mit dem Bariumsulfat versetzten organischen Substanzen als Ausgangsmaterial für die Komposit-Herstellung genutzt werden;
- Verfahren zur Herstellung des Bariumsulfat-Komposits, wobei die Dispergierung des Bariumsulfats im Masterbatch bzw. in den organischen Substanzen mittels üblicher Dispergierverfahren, insbesondere unter Verwendung von Schmelzeextrudern, Dissolvern, Dreiwalzen, Kugelmühlen, Perlmühlen, Tauchmühlen, Ultraschall oder Knetern durchgeführt wird;
- Verfahren zur Herstellung des Bariumsulfat-Komposits, wobei für die Dispergierung des Bariumsulfats vorzugsweise Tauchmühlen oder Perlmühlen verwendet werden;
- Verfahren zur Herstellung des Bariumsulfat-Komposits, wobei für die Dispergierung des Bariumsulfats vorzugsweise Perlmühlen verwendet werden, wobei die Perlen vorzugsweise Durchmesser von d < 1,5 mm, besonders bevorzugt von d < 1,0 mm, ganz besonders bevorzugt von d < 0,3 mm aufweisen;
- Bariumsulfat-Komposit, das verbesserte mechanische Eigenschaften und verbesserte tribologische Eigenschaften besitzt;
- Bariumsulfat-Komposit, bei dem gleichzeitig die Festigkeit und die Zähigkeit durch den Einsatz von Bariumsulfatpartikeln, bevorzugt oberflächenmodifizierten Bariumsulfatpartikeln, verbessert werden;
- Bariumsulfat-Komposit, bei dem die Verbesserung der Festigkeit und Zähigkeit in einem Biegeversuch oder einem Zugversuch beobachtet werden können;
- Bariumsulfat-Komposit, das verbesserte Schlagzähigkeiten und/oder verbesserte Kerbschlagzähigkeiten besitzt;
- Bariumsulfat-Komposit, bei dem die Verschleißfestigkeit durch den Einsatz von Bariumsulfatpartikeln, bevorzugt oberflächenmodifizierten Bariumsulfatpartikeln, verbessert wird;
- Bariumsulfat-Komposit, das verbesserte Kratzfestigkeit besitzt;
- Bariumsulfat-Komposit, das verbesserte Spannungsrissbeständigkeit besitzt;
- Bariumsulfat-Komposit, bei dem eine Verbesserung der Kriechbeständigkeit beobachtet werden kann;
- Verwendung des Bariumsulfat-Komposits als Ausgangsmaterial für die Herstellung von Formkörpern, Halbzeugen, Folien oder Fasern, insbesondere für die Herstellung von Spritzgussteilen, Blasformen oder Fasern;
- Verwendung des Bariumsulfat-Komposits in Form von Fasern, die sich vorzugsweise durch verbesserte Reißfestigkeiten auszeichnen;
- Verwendung des Bariumsulfat-Komposits für Bauteile für den Automobil-, Luftfahrt- oder den Raumfahrt-Bereich, insbesondere in Form von Gleitlagern, Zahnrädern, Walzen- oder Kolbenbeschichtungen;
- Verwendung des Bariumsulfat-Komposits, beispielsweise zur Herstellung von Bauteilen im Gussverfahren, als Klebstoff, als Industriefußboden, als Betonbeschichtung, als Betonreparatur, als Korrosionsschutzbeschichtung, zum Vergießen von elektrischen Bauteilen oder anderen Objekten, zur Sanierung von Metallrohren, als Trägermaterial in der Kunst oder zum Abdichten von Holzterrarien.

Die Erfindung wird durch die nachfolgenden Beispiele erläutert, ohne sie darauf einzuschränken.

### Beispiel 1

Als Ausgangsmaterial wird ein gefälltes Bariumsulfat verwendet, das eine Kristallitgröße d₅₀ von 26 nm besitzt. Als polymere Matrix wird das kommerziell erhältliche Epoxidharz Epilox A 19-03 der Fa. Leuna-Harze GmbH verwendet. Als Härter wird der aminische Härter HY 2954 der Fa. Vantico GmbH & Co KG verwendet.

Zunächst wird das pulverförmige Bariumsulfat in das flüssige Epoxydharz unter Dissolverdisperierung mit einem Gehalt von 14 Vol.-% eingearbeitet. Nach dieser Vordisperierung wird das Gemisch mit einer Tauchmühle 90 Minuten bei einer Drehzahl von 2500 U/min dispergiert. Als Perlen werden 1 mm Zirkondioxidperlen verwendet. Dieser Ansatz wird mit dem Reinharz gemischt, so dass nach Zugabe des Härters Komposite entstehen, die 2 bis 10 Vol.-% Bariumsulfat enthalten. Die Aushärtung der Komposite erfolgt im Trockenschrank.

Für die mechanischen Prüfungen des Komposits wurden Prüfkörper mit definierten Abmessungen hergestellt.

Die Bestimmung der Bruchzähigkeit K_{IC} (nach ASTM E399-90) erfolgte bei einer Prüfgeschwindigkeit von 0,1 mm/min mittels Compact Tension (CT) Probekörpern. In den CT-Proben wurde ein scharfer Anriss durch den kontrollierten Impact einer Rasierklinge erzeugt. Dadurch ergibt sich an der Rissspitze der zur Ermittlung des kritischen Spannungsintensistätsfaktors erforderliche ebene Dehnungszustand.

Die mechanische Charakterisierung erfolgte in einem Dreipunktbiegeversuch nach DIN EN ISO 178 anhand von Probekörpern, die aus gegossenen Platten mit einer Präzisionssäge herausgearbeitet wurden. Mindestens fünf Proben der Abmessungen 80 mm x 10 mm x 4 mm wurden bei einer Prüfgeschwindigkeit von 2 mm/min bei Raumtemperatur geprüft.

Abbildung 1 stellt die Bruchzähigkeit der Komposite als Funktion des Bariumsulfat-Gehalts dar. Es zeigt sich, dass bei einer Einsatzkonzentration von 10 Vol.-% die Bruchzähigkeit um 66 % im Vergleich zum Reinharz erhöht wird.

In den Abbildungen 2 und 3 sind die Ergebnisse des 3-Punkt-Biegeversuchs der Komposite gegen die Bariumsulfat-Einsatzkonzentration aufgetragen. Das Biegemodul wird durch den Einsatz von Bariumsulfat von 2670 MPa auf 3509 MPa erhöht. Die Biegefestigkeit kann von 129 MPa beim Reinharz auf 136 MPa bei 10 Vol.-% Bariumsulfat erhöht werden. Die Vergleichsprobe, die 5 Vol.-% undispergiertes Bariumsulfat enthält, zeigt eine im Vergleich zum Reinharz verschlechterte Biegefestigkeit auf.

Zur Bestimmung der spezifischen Verschleißrate des Komposites wurden Prüfkörper der Abmessungen 4 x 4 x 20 mm³ gesägt. Diese Prüfkörper werden mit Hilfe der Modell-Prüfanordnung "Block und Ring" tribologisch charakterisiert. Es wurde ein Anpressdruck von 0,6 MPa, eine Relativgeschwindigkeit von 0,03 m/s und eine mittleren Korngröße der Gegenkörperoberfläche von 22 µm verwendet. In dieser Prüfung lag die spezifische Verschleißrate beim 10 Vol.-%igen Komposit bei nur 0,36 mm³/Nm. Das Reinharz wies mit 0,48 mm³/Nm eine deutlich höhere spezifische Verschleißrate auf.

### Beispiel 2

Als Ausgangsmaterial wird ein oberflächenmodifiziertes Bariumsulfat mit einer Kristallitgröße d₅₀ von 26 nm eingesetzt. Die Bariumsulfatoberfläche ist anorganisch nachbehandelt und silanisiert. Die anorganische Oberflächenmodifizierung besteht aus einer Silicium-Aluminium-Sauerstoff-Verbindung. Zur Silanisierung wurde das gamma-Glycidoxypropyltrimethoxysilane (Silquest A-187 der Fa. GE Silicons) verwendet.

Hergestellt werden kann das anorganisch oberflächenmodifizierte Bariumsulfat beispielsweise nach folgendem Verfahren:
3,7 kg einer 6,5 Gew.-%igen wässrigen Suspension ultrafeiner BaSO₄-Partikel mit mittleren Primärpartikeldurchmessern d₅₀ von 26 nm (Ergebnis von TEM-Untersuchungen) werden unter Rühren auf eine Temperatur von 40°C erhitzt. Mit 10 %iger Natronlauge wird der pH-Wert der Suspension auf 12 eingestellt. Unter starkem Rühren werden gleichzeitig 14,7 ml einer wässrigen Natriumsilikatlösung (284 g SiO₂/L), 51,9 ml einer Aluminiumsulfat-Lösung (mit 75 g Al₂O₃/L) und 9,7 ml einer Natriumaluminat-Lösung (275 g Al₂O₃/L) unter Einhaltung des pH-Wertes von 12,0 zur Suspension gegeben. Die Suspension wird für weitere 10 Minuten unter starkem Rühren homogenisiert. Anschließend wird der pH-Wert langsam, vorzugsweise innerhalb von 60 Minuten, durch Zugabe einer 5 %igen Schwefelsäure auf einen pH-Wert von 7,5 eingestellt. Es schließt sich eine Reifezeit von 10 Minuten bei ebenfalls einer Temperatur 40°C an. Die Suspension wird dann auf eine Leitfähigkeit kleiner 100 µS/cm gewaschen und anschließend sprühgetrocknet. Die gewaschene Suspension wird mit VE-Wasser auf einen Feststoffgehalt von 20 Gew.% eingestellt und mittels Dissolver 15 Minuten aufdispergiert. Der Suspension werden unter Dissolverdispergierung 15 g eines gamma-Glycidoxypropyltrimethoxysilane (Silquest A-187 der Fa. GE Silicons) langsam zugegeben. Die Suspension wird anschließend für weitere 20 Minuten mit dem Dissolver dispergiert und dann im Gefriertrockner getrocknet.

Als polymere Matrix wird das kommerziell erhältliche Epoxidharz Epilox A 19-03 der Fa. Leuna-Harze GmbH verwendet. Als Härter wird der aminische Härter HY 2954 der Fa. Vantico GmbH & Co KG verwendet.

Zunächst wird das pulverförmige Bariumsulfat in das flüssige Epoxydharz unter Dissolverdisperierung mit einem Gehalt von 14 Vol-% eingearbeitet. Nach dieser Vordisperierung wird das Gemisch mit einer Tauchmühle 90 Minuten bei einer Drehzahl von 2500 U/min dispergiert. Als Perlen werden 1 mm Zirkondioxidperlen verwendet. Dieser Ansatz wird mit dem Reinharz gemischt, so dass nach Zugabe des Härters ein Komposit entsteht, das 5 Vol-% Bariumsulfat enthält. Die Aushärtung der Komposite erfolgte im Trockenschrank.

Analog zum oben beschriebenen Beispiel 1 werden Prüfkörper mit definierten Abmessungen hergestellt, die im Biegeversuch und bezüglich ihrer Bruchzähigkeit vermessen wurden.

Die Ergebnisse des Biegeversuchs und der Bruchzähigkeit des Komposits sind im Vergleich zu den Ergebnissen des Komposits aus Beispiel 1 in der Tabelle 1 dargestellt.

Das mit 5 Vol.-% oberflächenmodifiziertem Bariumsulfat gefüllte Harz zeigt im Vergleich zum Reinharz ein stark erhöhtes Biegemodul und eine deutlich erhöhte Biegefestigkeit. Auch die Bruchzähigkeit konnte durch den Einsatz von oberflächenmodifiziertem Bariumsulfat deutlich verbessert werden. Gegenüber dem mit 5 Vol.-% Bariumsulfat aus Beispiel 1 gefüllten Harz ist bei dem mit 5 Vol.-% oberflächenmodifizierten Bariumsulfat gefüllten Harz das Biegemodul und die Biegefestigkeit deutlich erhöht.

**Tabelle 1: Ergebnisse des Biegeversuchs und der Prüfung der Bruchzähigkeit**

| Probe | Biegemodul [MPa] | Biegefestigkeit [MPa] | Bruchzähigkeit [MPa m^{½}] |
|---|---|---|---|
| Reinharz (Epilox A 19-03) | 2670 | 130 | 0,71 |
| Reinharz + 5 Vol.-% Bariumsulfat (aus Beispiel 1) | 2963 | 139 | 0,93 |
| Reinharz + 5 Vol.-% oberflächenmodifiziertes Bariumsulfat (aus Beispiel 2) | 3345 | 148 | 0,76 |

Abbildung 1: Bruchzähigkeit des Komposits nach Beispiel 1 als Funktion des Füllgrades 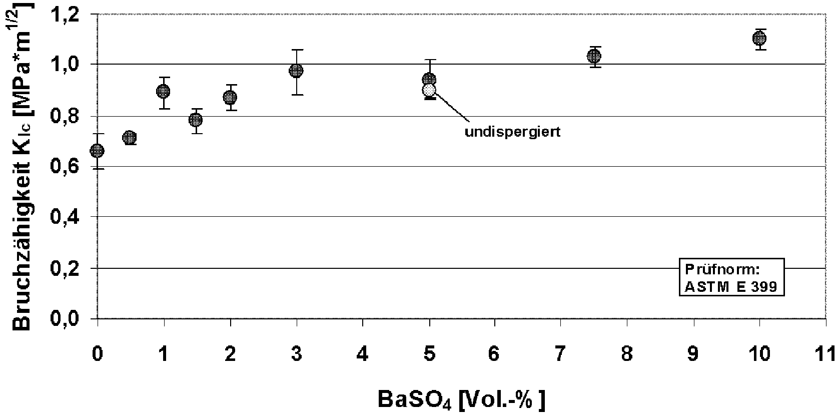
Abbildung 2: Biegemodul des Komposits nach Beispiel 1 als Funktion des Füllgrades 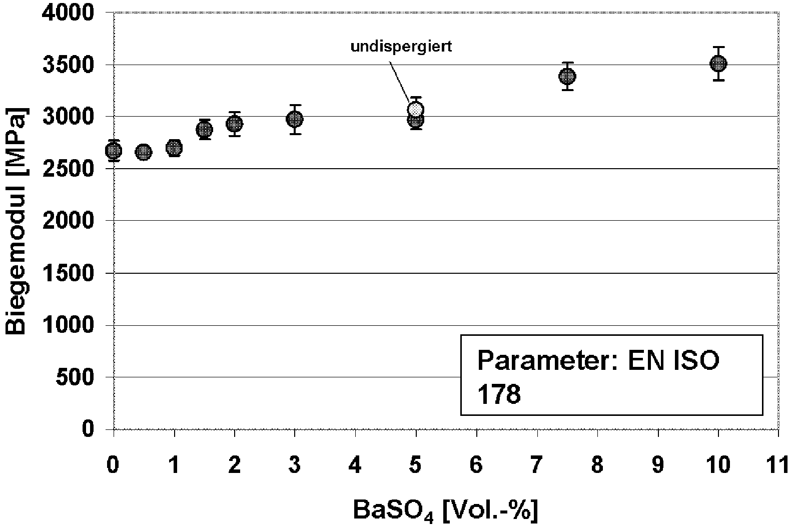
Abbildung 3: Biegefestigkeit des Komposits nach Beispiel 1 als Funktion des Füllgrades

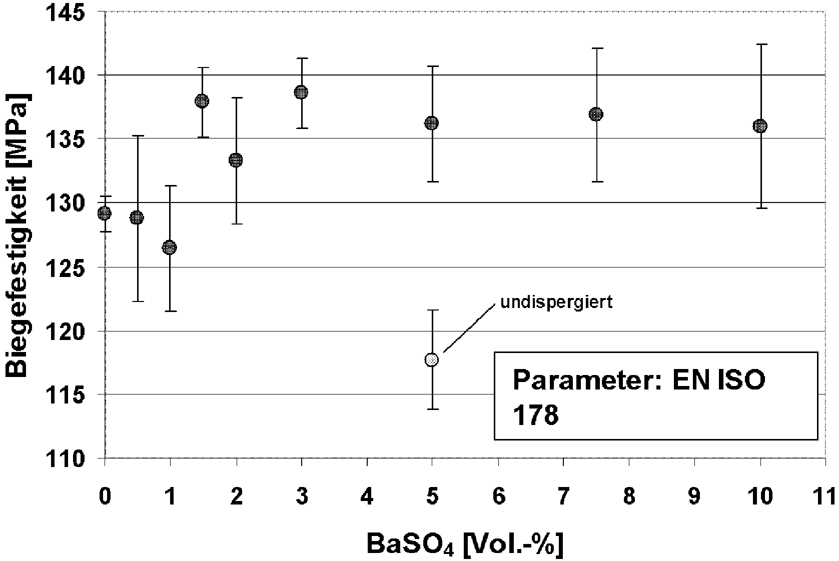

### Beispiel 3

Als Ausgangsmaterial wird ein gefälltes Bariumsulfat verwendet, dass eine Kristallitgröße d₅₀ von 26 nm besitzt. Zur Herstellung des Komposites wurde das Bariumsulfat zunächst in Ethylenglyklol (EG) mittels Perlmahlung dispergiert und anschließend über ein 1 µm-Filter filtriert. Die 30 %-ige Suspension wurde dann bei der Polykondensation zur Herstellung eines PET-Granulates mit 2,5 Gew.-% Bariumsulfat eingesetzt.

Aus dem Komposit und einem PET-Rohpolymer wurden unter Verwendung einer Spritzgussmaschine Probekörper für Zug- und Biegeversuche hergestellt. Anschließend wurden die Proben für 96 Stunden bei 23°C und 50% rel. Luftfeuchtigkeit konditioniert.

In den Tabellen 2 und 3 sind die Ergebnisse der Zugprüfung (nach DIN EN ISO 527) und der Biegeprüfungen (nach DIN EN ISO 178) zusammengefasst. Im Vergleich zum Rohpolymer sind das Zugmodul und die Bruchdehnung verbessert. Auch das Biegemodul und die Biegefestigkeit konnte durch den Einsatz von Bariumsulfat verbessert werden. Auffällig ist zudem die deutlich Erhöhung der Vicat-Erweichungstemperatur von 78 °C bei Rohpolymer auf 168 °C beim Nanokomposit.

**Tabelle 2: Ergebnisse des Zugversuchs am Komposit aus PET und Bariumsulfat gemäß Beispiel 3**

| Probe | Zugmodul [MPa] | Bruchdehnung [%] |
|---|---|---|
| PET Rohpolymer | 2443 | 7,8 |
| Komposit aus PET und 2,5 Gew.-% Bariumsulfat | 3068 | 0,4 |

**Tabelle 3: Ergebnisse des Biegeversuchs am Komposit aus PET und Bariumsulfat gemäß Beispiel 3**

| Probe | Biegefestigkeit [MPa] | Biegemodul [MPa] |
|---|---|---|
| PET Rohpolymer | 89 | 2380 |
| Komposit aus PET und 2,5 Gew.-% Bariumsulfat | 105 | 2719 |

### Beispiel 4

Als Ausgangsmaterial wird ein gefälltes Bariumsulfat verwendet, dass eine Kristallitgröße d₅₀ von 26 nm besitzt und dessen Oberfläche mit einer Fettsäure (Stearinsäure Edenor ST1) organisch oberflächenmodifiziert ist.

Hergestellt werden kann das organisch oberflächenmodifizierte Bariumsulfat beispielsweise nach folgendem Verfahren:
9 kg eines gefällten Bariumsulfates wurden zunächst stiftgemahlen. Anschließend wurde es mit 10 Gew.-% Stearinsäure (Edenor ST19 im Diosna-Mischer gemischt, wobei die Stearinsäure aufgrund von Temperaturentwicklung auf das Produkt aufgeschmolzen wurde. Das erhaltene Produkt wurde im Anschluss noch einmal stiftgemahlen

Aus diesem organisch oberflächenmodifizierten Bariumsulfat und einem kommerziellen Polyamid 6 (Ultramide B2715, BASF) wurde zunächst mittels Schmelzeextrusion ein 20 Gew.-%iges Masterbatch hergestellt. In einem zweiten Extruxionsschritt wurde dieses Masterbatch auf Bariumsulfatkonzentrationen von 2,0 Gew.-% und 7,4 Gew.% verdünnt. Unter Verwendung einer Spritzgussmaschine wurden Schulterstäbe für den Zugversuch (nach DIN EN ISO 527) und Kleinstäbe für den Biegeversuch (nach DIN EN ISO 178) angefertigt. Die Prüfkörper wurden anschließend für 72 Stunden bei 23 °C und 50 % rel. Luftfeuchtigkeit konditioniert. Die Ergebnisse der Zugprüfungen sind in der Tabelle 4 aufgelistet. Es ist ein deutlicher Anstieg der Zugfestigkeit, des Zugmoduls und eine Verringerung der Bruchdehnung bei den Kompositen im Vergleich zum Rohpolymer zu erkennen. Auch die Biegeeigenschaften (Biegemodul und Biegfestigkeit) konnten durch den Einsatz von oberflächenmodifiziertem Bariumsulfat deutlich verbessert werden (siehe Tabelle 5). Die Schlagzähigkeit (nach DIN EN ISO 179) wird nur beim Einsatz von 2 Gew.-% oberflächenmodifiziertem Bariumsulfat im Vergleich zum reinen Polyamid 6 verbessert.

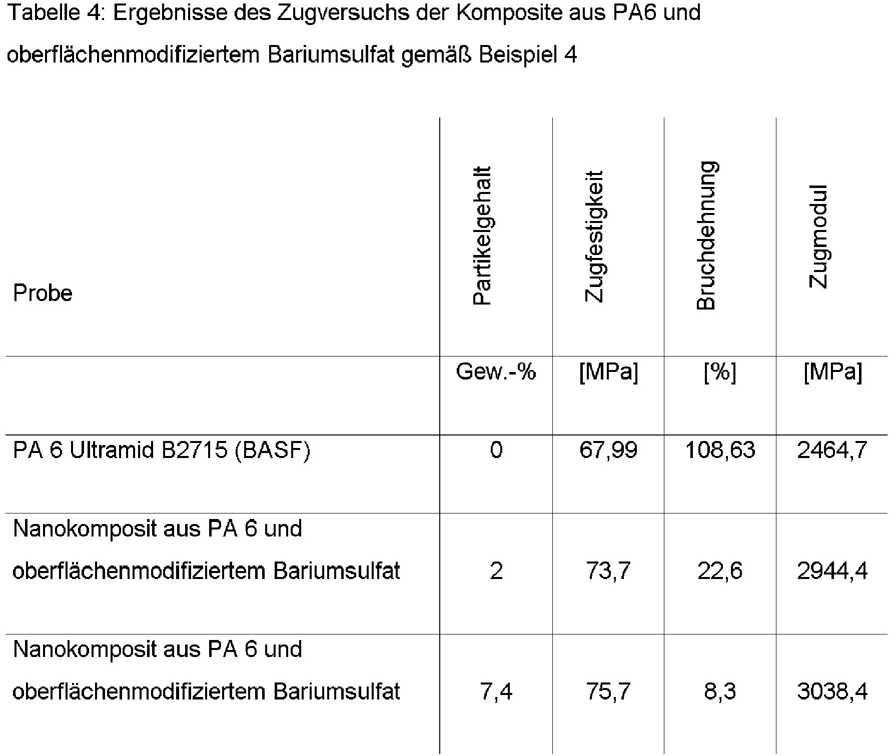

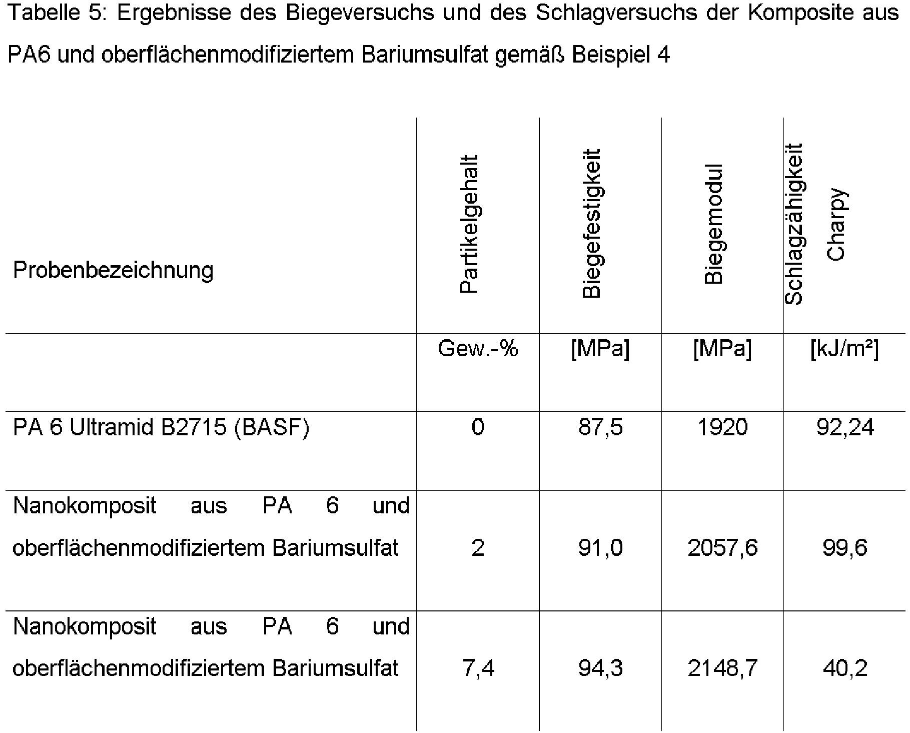

## Patentansprüche

1. Komposit aus Füllstoffen und Pigmenten in einer polymeren Matrix, **dadurch gekennzeichnet, dass** es sprühgetrocknetes Bariumsulfat-Pulver, welches in einem Fällreaktor zur Fällung von nanoskaligen Partikeln, einer Reaktionszelle zur ultraschnellen Vermischung von mehreren Reaktanten, durch Mischung von wässrigen Lösungen von Bariumhydroxid oder Bariumsulfid oder Bariumchlorid und Natriumsulfat oder Schwefelsäure, hergestellt wurde, und mindestens einen Thermoplast, einen Hochleistungskunststoff und/oder ein Epoxidharz enthält, wobei die Kristallitgröße des Bariumsulfats d₅₀ zwischen 3 und 50 nm beträgt und das Bariumsulfat sowohl anorganisch oder organisch oberflächenmodifiziert als auch nicht oberflächenmodifiziert sein kann sowie die Primärpartikel des Bariumsulfats eine logarithmische Partikelgrößenverteilung mit einem Median von d = 5 nm bis 500 nm und eine logarithmische Partikelgrößenverteilung mit einer geometrischen Standardabweichungen von σg < 1,4 haben.

2. Komposit gemäß Anspruch 1, **dadurch gekennzeichnet, dass** als Thermoplast mindestens ein Polyester, ein Polyamid, ein PET, ein Polyethylen, ein Polypropylen, ein Polystyrol, dessen Copolymerisate und/oder Blends, ein Polycarbonat, ein PMMA und/oder ein Polyvinylchlorid oder dass als Thermoplast Mischungen von mindestens zwei dieser Thermoplaste ausgewählt werden.

3. Komposit gemäß Anspruch 1 oder 2, **dadurch gekennzeichnet, dass** als Hochleistungskunststoff mindestens ein PTFE, ein Fluor-Thermoplast (z. B. FEP, PFA, u.a.), PVDF, ein Polysulfon (z. B. PES, PSU, PPSU, u.a.), ein Polyetherimid, ein flüssigkristallines Polymer und/oder ein Polyetherketon oder dass als Hochleistungskunststoff Mischungen von mindestens zwei dieser Hochleistungskunststoffe ausgewählt werden.

4. Komposit gemäß einem oder mehreren der Ansprüche 1 bis 3, **dadurch gekennzeichnet, dass** das Komposit 12 bis 99,8 Gew.-% Thermoplast, 0,1 bis 60 Gew.-% Bariumsulfat, 0 bis 80 Gew.-% mineralischen Füllstoff und/oder Glasfaser, 0,05 bis 10 Gew.-% Antioxidant, 0 bis 2,0 Gew.-% organischen Metalldesaktivator, 0 bis 2,0 Gew.-% Prozessadditive (u. a. Dispergierhilfen, Haftvermittler, u. a.), 0 bis 10 Gew.-% Pigment, und 0 bis 40 Gew.-% Flammschutzmittel (z. B. Aluminiumhydroxid, Antimontrioxid, Magnesiumhydroxid, u. a.) enthält.

5. Komposit gemäß einem oder mehreren der Ansprüche 1 bis 4, **dadurch gekennzeichnet, dass** das Komposit 12 bis 99,9 Gew-% Hochleistungskunststoff, 0,1 bis 60 Gew-% Bariumsulfat, 0 bis 80 Gew-% mineralischen Füllstoff und/oder Glasfaser, 0 bis 5,0 Gew-% Prozessadditive (u.a. Dispergierhilfen, Haftvermittler), 0 bis 10 Gew-% Pigment enthält.

6. Komposit gemäß einem oder mehreren der Ansprüche 1 bis 5, **dadurch gekennzeichnet, dass** das Komposit 20 bis 99,9 Gew.-% Epoxidharz, 0,1 bis 60 Gew.-% Bariumsulfat, 0 bis 80 Gew.-% mineralischen Füllstoff und/oder Glasfaser, 0 bis 10 Gew.-% Prozessadditive, 0 bis 10 Gew.-% Pigment, und 0 bis 40 Gew.-% Aluminiumhydroxid enthält.

7. Komposit gemäß einem oder mehreren der Ansprüche 1 bis 6 **dadurch gekennzeichnet, dass** der Anteil an Bariumsulfat im Komposit 0,1 bis 60 Gew.-%, bevorzugt 0,5 bis 30 Gew.-%, besonders bevorzugt 1,0 bis 20 Gew.-%, beträgt.

8. Komposit gemäß einem oder mehreren der Ansprüche 1 bis 7, **dadurch gekennzeichnet, dass** das Bariumsulfat mit mindestens einer anorganischen Verbindung oberflächenmodifiziert ist.

9. Komposit gemäß Anspruch 8, **dadurch gekennzeichnet, dass** der Gewichtsanteil der anorganischen Verbindungen bezogen auf BaSO₄ 0,1 bis 50,0 Gew.-%, bevorzugt 1,0 bis 10,0 Gew.-% beträgt.

10. Komposit gemäß Anspruch 8 oder 9, **dadurch gekennzeichnet, dass** die anorganischen Verbindungen ausgewählt sind aus wasserlöslichen Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salzen.

11. Komposit gemäß einem oder mehreren der Ansprüche 8 bis 10, **dadurch gekennzeichnet, dass** die BaSO₄-Partikel zusätzlich zu der Oberflächenmodifizierung aus anorganischen Verbindungen mit mindestens einem Silan oder mehreren Silanen modifiziert sind.

12. Komposit gemäß Anspruch 11, **dadurch gekennzeichnet, dass** die Silane Alkoxyalkylsilane sind.

13. Komposit gemäß Anspruch 12, **dadurch gekennzeichnet, dass** die Alkoxyalkylsilane ausgewählt sind aus Octyltriethoxysilan, gamma-Methacrylpropyltrimethoxysilan, gamma-Glycidoxypropyltrimethoxy-silan, gamma-Aminopropyltriethoxysilan, gamma-Aminopropyltrimethoxysilan, gamma-Isocynatopropyltriethoxysilan, Vinyltrimethoxysilan und/oder hydrolysierten Silanen, wie gamma-Aminopropylsilsesquioxan (Fa. GE).

14. Komposit gemäß einem oder mehreren der Ansprüche 1 bis 13, **dadurch gekennzeichnet, dass** die BaSO₄-Partikel eine Primärpartikelgröße d₅₀ von von 0,05 bis 0,005 µm aufweisen.

15. Komposit gemäß einem oder mehreren der Ansprüche 1 bis 14, **dadurch gekennzeichnet, dass** das Bariumsulfat mit mindestens einer organischen Verbindung oberflächenmodifiziert ist.

16. Komposit gemäß Anspruch 15, **dadurch gekennzeichnet, dass** die organischen Verbindungen ausgewählt sind aus der Gruppe der Alkyl- und/oder Arylsulfonate, Alkyl- und/oder Arylsulfate, Alkyl- und/oder Arylphosphorsäureester, wobei die Alkyl- oder Arylreste durch funktionelle Gruppen substituiert sein können, und/oder Fettsäuren, die ggf. funktionelle Gruppen besitzen, oder aus Mischungen aus mindestes zwei dieser Verbindungen.

17. Komposit gemäß Anspruch 15 oder 16, **dadurch gekennzeichnet, dass** die organischen Verbindungen ausgewählt sind aus: Alkylsulfonsäuresalzen, Natriumpolyvinylsulfonat, Natrium-N-alkyl-benzolsulfonat, Natriumpolystyrolsulfonat, Natriumdodecylbenzolsulfonat, Natriumlaurylsulfat, Natriumcetylsulfat, Hydroxylaminsulfat, Triethanolammoniumlaurylsulfat, Phosphorsäuremonoethylmonobenzylester, Lithiumperfluoroctansulfonat, 12-Brom-1-dodecan-sulfonsäure, Natium-10-hydroxy-1-decansulfonat, Natrium-Carrageenan, Natrium-10-Mercapto-1-Cetansulfonat, Natrium-16-Ceten(1)sulfat, Oleylcetylalkoholsulfat, Ölsäuresulfat, 9,10-Dihydroxystearinsäure, Isostearinsäure, Stearinsäure, Ölsäure oder aus Mischungen aus mindestes zwei dieser Verbindungen.

18. Komposit gemäß einem oder mehreren der Ansprüche 15 bis 17, **dadurch gekennzeichnet, dass** das Bariumsulfat mit funktionellen Silanderivaten und/oder funktionellen Siloxanen nachbehandelt ist, wobei die funktionellen Silanderivate und/oder funktionellen Siloxane vorzugsweise ausgewählt sind aus: Octyltriethoxysilanen, Methyltriethoxysilanen, γ-Methacryloxypropyltrimethoxysilanen, γ-Glycidyloxypropyltrimethoxysilanen, γ-Aminopropyltriethoxysilanen, γ-Isocyanatopropyltriethoxysilanen, Vinyltrimethoxysilan oder aus Mischungen aus mindestes zwei solcher Verbindungen.

19. Verfahren zur Herstellung eines Komposits gemäß einem oder mehreren der Ansprüche 1 bis 18, **dadurch gekennzeichnet, dass** aus dem Bariumsulfat und einem Teil des Rohpolymers ein Masterbatch hergestellt wird und das Komposit durch Verdünnung des Masterbatches mit dem Rohpolymer unter Dispergierung erhalten wird.

20. Verfahren gemäß Anspruch 19, **dadurch gekennzeichnet, dass** aus dem Bariumsulfat und einem Teil des Rohpolymers ein Masterbatch hergestellt wird und das Komposit durch Verdünnung des Masterbatches mit dem Rohpolymer erhalten wird, wobei der Masterbatch 5 - 80 Gew.-% Bariumsulfat, bevorzugt 15 - 60 Gew.-% Bariumsulfat enthält.

21. Verfahren gemäß Anspruch 19 oder 20, **dadurch gekennzeichnet, dass** das Masterbatch mit den weiteren Bestandteile der Rezeptur in einem oder mehreren Schritten vermischt wird und sich vorzugsweise eine Dispergierung anschließt.

22. Verfahren gemäß einem oder mehreren der Ansprüche 19 bis 21, **dadurch gekennzeichnet, dass** das Bariumsulfat zunächst in organischen Substanzen, insbesondere in Aminen, Polyolen, Styrolen, Formaldehyden und dessen Formmassen, Vinylestern-Harzen, Polyesterharzen oder Silikonharzen eingearbeitet und dispergiert wird.

23. Verfahren gemäß Anspruch 22, **dadurch gekennzeichnet, dass** die mit dem Bariumsulfat versetzten organischen Substanzen als Ausgangsmaterial für die Komposit-Herstellung genutzt werden.

24. Verfahren gemäß einem oder mehreren der Ansprüche 19 bis 23, **dadurch gekennzeichnet, dass** die Dispergierung des Bariumsulfats im Masterbatch bzw. in einer organischen Substanz mittels üblicher Dispergierverfahren, insbesondere unter Verwendung von Schmelzextrudern, Dissolvern, Dreiwalzen, Kugelmühlen, Perlmühlen, Tauchmühlen, Ultraschall oder Knetern durchgeführt wird.

25. Verfahren gemäß einem oder mehreren der Ansprüche 19 bis 24, **dadurch gekennzeichnet, dass** die Dispergierung des Bariumsulfats vorzugsweise in Tauchmühlen oder Perlmühlen durchgeführt wird.

26. Verfahren gemäß einem oder mehreren der Ansprüche 19 bis 25, **dadurch gekennzeichnet, dass** die Dispergierung des Bariumsulfats in Perlmühlen durchgeführt wird, wobei Perlen mit Durchmessern von d < 1,5 mm, besonders bevorzugt von d < 1,0 mm, ganz besonders bevorzugt von d < 0,3 mm eingesetzt werden.

27. Verwendung eines Komposits gemäß einem oder mehreren der Ansprüche 1 bis 18 als Ausgangsmaterial für die Herstellung von Formkörpern, Halbzeugen, Folien oder Fasern, insbesondere für die Herstellung von Spritzgussteilen, Blasformen oder Fasern.

28. Verwendung eines Komposits gemäß einem oder mehreren der Ansprüche 1 bis 18 für Bauteile für den Automobil-, Luftfahrt- oder den Raumfahrt-Bereich, insbesondere in Form von Gleitlagern, Zahnrädern, Walzen- oder Kolbenbeschichtungen.

29. Verwendung eines Komposits gemäß einem oder mehreren der Ansprüche 1 bis 18 zur Herstellung von Bauteilen im Gussverfahren, als Klebstoff, als Industriefußboden, als Betonbeschichtung, als Betonreparatur, als Korrosionsschutzbeschichtung, zum Vergießen von elektrischen Bauteilen oder anderen Objekten, zur Sanierung von Metallrohren, als Trägermaterial in der Kunst oder zum Abdichten von Holzterrarien.

## Claims

1. Composite of fillers and pigments in a polymer matrix, **characterized in that** it contains a spray-dried barium sulfate powder, which was prepared in a precipitation reactor for precipitation of nano-scale particles, a reaction cell for ultra-fast mixing of multiple reactants by mixing of aqueous solutions of barium hydroxide or barium sulfide or barium chloride and sodium sulfate or sulfuric acid, and at least one thermoplastic, one high performance plastic and/or one epoxide resin, wherein the crystallite size of the barium sulfate d₅₀ is between 3 and 50 nm and the barium sulfate can be both inorganic or organic surface-modified and also not surface-modified as well as the primary particles of the barium sulfate have a logarithmic particle size distribution with a median of from d = 5 nm to 500 nm and a logarithmic particle size distribution with a geometrically standard deviation of σ_{g} < 1.4.

2. Composite according to claim 1, **characterized in that** at least one polyester, polyamide, PET, polyethylene, polyproplyene, polystyrene, the copolymers and/or blends thereof, polycarbonate, PMMA and/or polyvinylchloride is selected as thermoplastic or that at least two of the thermoplastics are selected as thermoplastic mixtures.

3. Composite according to claim 1 or 2, **characterized in that** at least one PTFE, fluorine-thermoplastic (for example FEP, PFA, inter alia), PVDF, polysulfone (for example PES, PSU, PPSU, inter alia), polyetherimide, liquid crystalline polymer and/or polyether ketone is selected as high performance plastic or mixtures of at least two of the high performance plastics are selected as high performance plastic.

4. Composite according to one or more of claims 1 to 3, **characterized in that** the composite contains 12 to 99.8 wt.% thermoplastic, 0.1 to 60 wt.% barium sulfate, 0 to 80 wt.% mineral filler and/or glass fiber, 0.05 to 10 wt.% antioxidant, 0 to 2.0 wt.% organic metal deactivator, 0 to 2.0 wt.% process additives (amongst others dispersing agents, adhesives inter alia), 0 to 10 wt.% pigment, and 0 to 40 wt.% flame retardants (for example aluminum hydroxide, antimony trioxide, magnesium hydroxide, inter alia).

5. Composite according to one or more of claims 1 to 4, **characterized in that** the composite contains 12 to 99.9 wt.% high performance plastic, 0.1 to 60 wt.% barium sulfate, 0 to 80 wt.% mineral filler and/or glass fiber, 0 to 5.0 wt.% process additives (among others dispersing agents, adhesives), 0 to 10 wt.% pigment.

6. Composite according to one or more of claims 1 to 5, **characterized in that** the composite contains 20 to 99.9 wt.% epoxide resins, 0.1 to 60 wt.% barium sulfate, 0 to 80 wt.% mineral filler and/or glass fiber, 0 to 10 wt.% process additives, 0 to 10 wt.% pigment, and 0 to 40 wt.% aluminum hydroxide.

7. Composite according to 1 or more of claims 1 to 6, **characterized in that** the content of barium sulfate in the composite is 0.1 to 60 wt.%, preferably 0.5 to 30 wt.%, particularly preferably 1.0 to 20 wt.%.

8. Composite according to one or more of claims 1 to 7, **characterized in that** the barium sulfate is surface-modified with at least one inorganic compound.

9. Composite according to claim 8, **characterized in that** the weight percentage of the inorganic compounds is 0.1 to 50.0 wt.% with respect to BaSO₄ preferably 1.0 to 10.0 wt.%.

10. Composite according to claim 8 or 9, **characterized in that** the inorganic compounds are selected from water soluble aluminum-, antimony-, barium-, calcium-, cerium-, chloride-, cobalt-, iron-, phosphor-, carbon-, manganese-, oxygen-, sulfur-, silicon-, nitrogen-, strontium-, vanadium-, zinc-, tin- and/or zirconium-compounds or salts.

11. Composite according to one or more of claims 8 to 10, **characterized in that** the BaSO₄-particles are modified with at least one silane or more silanes in addition to the surface-modification with inorganic compounds.

12. Composite according to claim 11, **characterized in that** the silanes are alkoxyalkylsilanes.

13. Composite according to claim 12, **characterized in that** the alkoxyalkylsilanes are selected from octyltriethoxysilane, gamma-methacrylpropyltrimethoxysilane, gamma-gycidoxypropyltrimethosy-silane, gamma-aminopropyltriethoxysilane, gamma-aminopropyltrimethoxysilane, gamma-isocynatopropytriethoxysilane, vinyltrimethoxysilane and/or hydrolyzed silanes, such as gamma-aminopropylsilsesquioxane (GE).

14. Composite according to one or more of claims 1 to 13, **characterized in that** the BaSO₄-particles have a primary particle size d₅₀ of 0.05 to 0.005 µm.

15. Composite according to one or more of claims 1 to 14, **characterized in that** the barium sulfate is surface-treated with at least one organic compound.

16. Composite according to claim 15, **characterized in that** the organic compounds are selected from the group of alkyl- and/or arylsulfonates, alkyl- and/or arylsulfates, alkyl- and/or arylphosphor acid ester, wherein the alkyl- or aryl groups can be substituted with functional groups, and/or fatty acids which optionally have functional groups, or from mixtures of at least two of these compounds.

17. Composite according to claim 15 or 16, **characterized in that** the organic compounds are selected from: salts of alkylsulfonic acids, sodium polyvinyl sulfonate, sodium-N-alkyl-benzenesulfonate, sodium polystyrene sulfonate, sodium dodecyl benzene sulfonate, sodium lauryl sulfate, sodium cetyl sulfate, hydroxylamine sulfate, triethanolammonium lauryl sulfate, phosphoric acid monoethyl monobenzyl ester, lithium perfluoro octane sulfonate, 12-bromo-1-dodecane sulfonic acid, sodium 10-hydroxy-1-decane sulfonate, sodium carrageenan, sodium-10-mercapto-1-cetane sulfonate, sodium-16-cetene(1) sulfate, oleyl cetyl alcohol sulfate, oleic acid sulfate, 9,10-dihydroxystearic acid, isostearic acid, stearic acid, oleic acid or from mixtures of at least two of these compounds.

18. Composite according to one or more of claims 15 to 17, **characterized in that** the barium sulfate is post-treated with functional silane derivatives and/or functional siloxanes, wherein the functional silane derivatives and/or functional siloxanes are preferably selected from: octyltriethoxysilanes, methyl triethoxy silanes, γ-methacryloxypropyltrimethoxysilanes, γ-glycidyloxypropyltrimethoxysilanes, γ-aminopropyltriethoxysilanes, γ-isocyanatopropyltriethoxysilanes and vinyltrimethoxysilane or from mixtures of at least two of such compounds.

19. Method for the production of a composite according to one or more of claims 1 to 18, **characterized in that** a master batch is produced from the barium sulfate and part of the crude polymer and the composite is obtained by dilution of the master batch with the crude polymer and dispersing it.

20. Method according to claim 19, **characterized in that** a master batch is produced from the barium sulfate and part of the crude polymer and the composite is obtained by dilution of the master batch with the crude polymer, wherein the master batch contains 5-80 wt.% barium sulfate, preferably 15-60 wt.% barium sulfate.

21. Method according to claim 19 or 20, **characterized in that** the master batch is mixed with the further components of the formulation in one or more steps and is preferably followed by dispersion.

22. Method according to one or more of claims 19 to 21, **characterized in that** the barium sulfate is first incorporated into organic substances, in particular into amines, polyols, styrenes, formaldehydes and the molding composition thereof, vinylesters-resins, polyester resins or silicone resins and dispersing it.

23. Method according to claim 22, **characterized in that** the organic substances mixed with the barium sulfate are used as starting material for the composite-production.

24. Method according to one or more of claims 19 to 23, **characterized in that** the dispersion of the barium sulfate in the master batch or in an organic substance is performed using general dispersing methods, in particular by using melt extruders, high-speed mixers, triple roll mills, ball mills, bead mills, basket mills, ultrasound or kneaders.

25. Method according to one or more of claims 19 to 24, **characterized in that** the dispersion of the barium sulfate is preferably performed in basket mills or bead mills.

26. Method according to one or more of claims 19 to 25, **characterized in that** the dispersion of the barium sulfate is performed in ball mills, wherein balls having diameters of d < 1.5 mm, particularly preferably of d < 1.0 mm, especially preferably of d < 0.3 mm are used.

27. Use of a composite according to one or more of claims 1 to 18 as starting material for the production of molded bodies, semi-finished products, films or fibers, especially for the production of injection molded components, blow moldings or fibers.

28. Use of a composite according to one or more of claims 1 to 18 for constructional elements for the automobile-, aviation- or spaceflight-sector, especially in the form of plain bearing, gear wheels, roller- or piston coatings.

29. Use of a composite according to one or more of claims 1 to 18 for the production of constructional elements in casting process, as adhesive, as industry flooring, as concrete coating, as concrete repair, as corrosion protection coating, for casting of electric elements or other objects, for restoration of metal pipes, as support in art or for sealing wooden terrariums.

## Revendications

1. Matériau composite constitué de charges et de pigments dans une matrice polymère, **caractérisé en ce qu'**il contient de la poudre de sulfate de baryum qui, avant d'être séchée par atomisation, a été produite au sein d'un réacteur de précipitation destiné à précipiter des nanoparticules, dans une cellule de réaction permettant de réaliser un mélange de plusieurs réactifs de manière ultra-rapide, en mélangeant des solutions aqueuses d'hydroxyde de baryum ou de sulfure de baryum ou de chlorure de baryum avec du sulfate de sodium ou de l'acide sulfurique, et au moins un matériau thermoplastique, une matière plastique à haute performance et/ou une résine époxyde, la taille des cristallites de sulfate de baryum d₅₀ étant comprise entre 3 et 50 nm et ledit sulfate de baryum pouvant soit comporter des modifications de surface de nature inorganique ou organique soit en être dépourvu, les particules primaires dudit sulfate de baryum ayant une granulométrie de particule logarithmique dont la médiane d est comprise entre 5 nm et 500 nm et une granulométrie de particule logarithmique dont l'écart type géométrique σ_{g} est < 1,4.

2. Matériau composite selon la revendication 1, **caractérisé en ce que** l'on choisit, en tant que matériau thermoplastique, au moins un polyester, un polyamide, un PET, un polyéthylène, un polypropylène, un polystyrène, ses produits de copolymérisation et/ou mélanges homogènes avec d'autres polymères, un polycarbonate, un PMMA et/ou un polychlorure de vinyle ou que l'on choisit, en tant que matériau thermoplastique, des mélanges d'au moins deux desdits matériaux thermoplastiques.

3. Matériau composite selon les revendications 1 ou 2, **caractérisé en ce que** l'on choisit, en tant que matière plastique à haute performance, au moins un PTFE, un matériau thermoplastique fluoré (par exemple, le FEP, le PFA et d'autres), le PVDF, un polysulfone (par exemple, le PES, le PSU, le PPSU et d'autres), un polyéther-imide, un polymère sous forme de cristaux liquides et/ou une polyéther-cétone, ou que l'on choisit, en tant matière plastique à haute performance, des mélanges réalisés à partir d'au moins deux desdites matières plastiques à haute performance.

4. Matériau composite selon une ou plusieurs des revendications 1 à 3, **caractérisé en ce que** ledit matériau composite contient 12 à 99,8 % en poids de matériau thermoplastique, 0,1 à 60 % en poids de sulfate de baryum, 0 à 80 % % en poids de charge minérale et/ou de fibres de verre, 0,05 à 10 % en poids d'antioxydant, 0 à 2,0 % en poids d'agent organique désactivateur de métaux, 0 à 2,0 % en poids d'additifs de transformation (dont, entre autres, des agents auxiliaires de dispersion, des agents promoteurs d'adhérence), 0 à 10 % en poids de pigment, et 0 à 40 % en poids d'agent ignifuge (par exemple, l'hydroxyde d'aluminium, le trioxyde d'antimoine, l'hydroxyde de magnésium et d'autres).

5. Matériau composite selon une ou plusieurs des revendications 1 à 4, **caractérisé en ce que** ledit matériau composite contient 12 à 99,9 % en poids de matière plastique à haute performance, 0,1 à 60 % en poids de sulfate de baryum, 0 à 80 % en poids de charge minérale et/ou de fibres de verre, 0 à 5,0 % en poids d'additifs de transformation (entre autres, des agents auxiliaires de dispersion, des agents promoteurs d'adhérence), 0 à 10 % en poids de pigment.

6. Matériau composite selon une ou plusieurs des revendications 1 à 5, **caractérisé en ce que** ledit matériau composite contient 20 à 99,9 % en poids de résine époxyde, 0,1 à 60 % en poids de sulfate de baryum, 0 à 80 % en poids de charge minérale et/ou de fibres de verre, 0 à 10 % en poids d'additifs de transformation, 0 à 10 % en poids de pigment, et 0 à 40 % en poids d'hydroxyde d'aluminium.

7. Matériau composite selon une ou plusieurs des revendications 1 à 6, **caractérisé en ce que** ledit matériau composite renferme une proportion de sulfate de baryum comprise entre 0,1 et 60 % en poids, de préférence entre 0,5 et 30 % en poids, avec une préférence particulière entre 1,0 et 20 % en poids.

8. Matériau composite selon une ou plusieurs des revendications 1 à 7, **caractérisé en ce que** ledit sulfate de baryum comporte une modification de surface avec au moins un composé inorganique.

9. Matériau composite selon la revendication 8, **caractérisé en ce que** la proportion pondérale desdits composés inorganiques est comprise entre 0,1 et 50,0 % en poids, de préférence entre 1,0 et 10,0 %, par rapport au BaSO₄.

10. Matériau composite selon les revendications 8 ou 9, **caractérisé en ce que** lesdits composés inorganiques sont choisis parmi des composés ou sels hydrosolubles d'aluminium, d'antimoine, de baryum, de calcium, de cérium, de chlore, de cobalt, de fer, de phosphore, de carbone, de manganèse, d'oxygène, de soufre, de silicium, d'azote, de strontium, de vanadium, de zinc, d'étain et/ou de zirconium.

11. Matériau composite selon une ou plusieurs des revendications 8 à 10, **caractérisé en ce que** les particules de BaSO₄ comportent, outre la modification de surface constituée de composés inorganiques, une modification avec au moins un silane ou plusieurs silanes.

12. Matériau composite selon la revendication 11, **caractérisé en ce que** lesdits silanes sont des alkoxyalkylsilanes.

13. Matériau composite selon la revendication 12, **caractérisé en ce que** lesdits alkoxyalkylsilanes sont choisis parmi l'octyltriéthoxysilane, le gamma-méthacrylpropyltriméthoxysilane, le gamma-glycidoxypropyltriméthoxysilane, le gamma-aminopropyltriéthoxysilane, le gamma-aminopropyltriméthoxysilane, le gamma-isocynatopropyltriéthoxysilane, le vinyltriméthoxysilane et/ou les silanes hydrolysés tels que le gamma-aminopropylsilsesquioxane (Soc. GE).

14. Matériau composite selon une ou plusieurs des revendications 1 à 13, **caractérisé en ce que** lesdites particules BaSO₄ présentent une taille de particules primaires d₅₀ comprise entre 0,05 et 0,005 µm.

15. Matériau composite selon une ou plusieurs des revendications 1 à 14, **caractérisé en ce que** ledit sulfate de baryum comporte une modification de surface avec au moins un composé organique.

16. Matériau composite selon la revendication 15, **caractérisé en ce que** lesdits composés organiques sont choisis dans le groupe des alkyl- et/ou arylsulfonates, des alkyl- et/ou arylsulfates, des alkyl- et/ou arylesters d'acide phosphorique, leurs radicaux alkyle ou aryle pouvant être substitués par des groupe fonctionnels, et/ou des acides gras éventuellement pourvus de groupes fonctionnels, ou parmi les mélanges d'au moins deux desdits composés.

17. Matériau composite selon les revendications 15 ou 16, **caractérisé en ce que** les composés organiques sont choisis parmi : les sels d'acide alkylsulfonique, le polyvinylsulfonate de sodium, le N-alkylbenzènesulfonate de sodium, le polystyrènesulfonate de sodium, le dodécylbenzènesulfonate de sodium, le laurylsulfate de sodium, le cétylsulfate de sodium, le sulfate d'hydroxylamine, le laurylsulfate de triéthanolammonium, l'ester monoéthylique-monobenzylique d'acide phosphorique, le perfluorooctanesulfonate de lithium, l'acide 12-bromo-1-dodécanesulfonique, le 10-hydroxy-1-décanesulfonate de sodium, le carraghénane de sodium, le 10-mercapto-1-cétanesulfonate de sodium, le 16-cétène(1)-sulfate de sodium, le sulfate d'alcools oléique-cétylique, le sulfate d'acide oléique, l'acide 9,10-dihydroxystéarique, l'acide isostéarique, l'acide stéarique, l'acide oléique, ou parmi les mélanges d'au moins deux desdits composés.

18. Matériau composite selon une ou plusieurs des revendications 15 à 17, **caractérisé en ce que** le sulfate de baryum subit un traitement ultérieur aux dérivés de silane fonctionnalisés et/ou aux siloxanes fonctionnalisés, les dérivés de silane fonctionnalisés et/ou les siloxanes fonctionnalisés étant préférentiellement choisis parmi : les octyltriéthoxysilanes, les méthyltriéthoxysilanes, les γ-méthacryloxypropyltriméthoxysilanes, les γ-glycidyloxypropyltriméthoxysilanes, les γ-aminopropyltriéthoxysilanes, les γ-Isocyanatopropyltriéthoxysilanes, le vinyltriméthoxysilane ou parmi les mélanges d'au moins deux desdits composés.

19. Procédé de préparation d'un matériau composite selon un ou plusieurs des revendications 1 à 18, **caractérisé en ce que** l'on prépare un mélange-maître à partir dudit sulfate de baryum et d'une partie du polymère non-transformé, et l'on obtient ledit matériau composite en diluant ledit mélange-maître avec ledit polymère non-transformé en mettant en oeuvre un processus de dispersion.

20. Procédé selon la revendication 19, **caractérisé en ce que** l'on prépare un mélange-maître à partir dudit sulfate de baryum et d'une partie du polymère non-transformé, et l'on obtient ledit matériau composite en diluant ledit mélange-maître avec ledit polymère non-transformé, le mélange-maître contenant 5 à 80 % en poids de sulfate de baryum, de préférence 15 à 60 % en poids de sulfate de baryum.

21. Procédé selon les revendications 19 ou 20, **caractérisé en ce que** l'on mélange ledit mélange-maître avec les autres constituants de la formulation en une ou plusieurs étapes, laquelle/lesquelles est/sont préférentiellement suivie(s) d'un processus de dispersion.

22. Procédé selon l'une ou plusieurs des revendications 19 à 21, **caractérisé en ce que** ledit sulfate de baryum est d'abord incorporé et dispersé dans des substances organiques, notamment dans des amines, des polyols, des styrènes, des formaldéhydes et leurs masses moulables, des résines d'esters vinyliques, des résines de polyester ou des résines de silicone.

23. Procédé selon la revendication 22, **caractérisé en ce que** lesdites substances organiques enrichies en sulfate de baryum sont mises en oeuvre en tant que matière de départ pour la préparation d'un matériau composite.

24. Procédé selon une ou plusieurs des revendications 19 à 23, **caractérisé en ce que** la dispersion du sulfate de baryum dans ledit mélange-maître ou dans une substance organique est effectuée en mettant en oeuvre des procédés de dispersion usuels, en utilisant plus particulièrement des extrudeuses à fusion, des disperseurs, des tricylindres, des broyeurs à billes, des broyeurs à micro-billes, des broyeurs à panier, des ultrasons ou des malaxeurs.

25. Procédé selon l'une ou plusieurs des revendications 19 à 24, **caractérisé en ce que** la dispersion du sulfate de baryum est préférentiellement effectuée dans des broyeurs à panier ou des broyeurs à micro-billes.

26. Procédé selon l'une ou plusieurs des revendications 19 à 25, **caractérisé en ce que** la dispersion du sulfate de baryum est effectuée dans des broyeur à micro-billes, en mettant en oeuvre des micro-billes ayant des diamètre d < 1,5 mm, avec une préférence particulière d < 1,0 mm, avec une préférence toute particulière d < 0,3 mm.

27. Utilisation d'un matériau composite selon une ou plusieurs des revendications 1 à 18 en que matériau de départ pour la fabrication de corps moulés, de produits semi-finis, de feuilles ou de fibres, plus particulièrement pour la fabrication de pièces moulées par injection, de moules de soufflage ou de fibres.

28. Utilisation d'un matériau composite selon une ou plusieurs des revendications 1 à 18 pour des éléments de construction destinés aux domaines de l'automobile, de l'aéronautique ou de l'exploration spatiale, notamment sous forme de coussinets, d'engrenages, de revêtements pour cylindres ou pour pistons.

29. Utilisation d'un matériau composite selon une ou plusieurs des revendications 1 à 18, pour la fabrication d'éléments de construction par coulée, en tant qu'agent adhésif, en tant que plancher industriel, en tant que revêtement de béton, pour réparer des éléments en béton, en tant que revêtement anticorrosion, pour fixer par coulée des composants électriques ou d'autres objets, pour réparer des tubes métalliques, en tant que matériau de support dans le domaine de l'art, ou par étanchéifier des terrariums en bois.
